(19) Europäisches Patentamt
European Patent Office
Office européen des brevets

(11) **EP 2 783 828 B1**

(12) **EUROPEAN PATENT SPECIFICATION**

(45) Date of publication and mention
of the grant of the patent:
**19.08.2015 Bulletin 2015/34**

(51) Int Cl.:
***B29C 45/80*** *(2006.01)*     ***B29C 45/76*** *(2006.01)*

(21) Application number: **14158044.9**

(22) Date of filing: **06.03.2014**

(54) **Injection molding machine**

Spritzgießmaschine

Machine de moulage à injection

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2013 JP 2013065159**

(43) Date of publication of application:
**01.10.2014 Bulletin 2014/40**

(73) Proprietor: **SUMITOMO HEAVY INDUSTRIES, LTD.**
**Tokyo 141-6025 (JP)**

(72) Inventor: **Ogiso, Taro**
**Kanagawa, 237-8555 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 884 159     US-A- 5 929 587**
**US-A1- 2003 062 643     US-A1- 2003 230 821**
**US-A1- 2011 054 820**

**Description**

**BACKGROUND**

1. Technical Field

The disclosures herein generally relate to an injection molding machine.

2. Description of Related Art

Conventionally, in controlling a toggle-link-type mold clamping unit that has a toggle link mechanism disposed between a pressure receiving plate and a mold clamping plate, and a crosshead of the toggle link mechanism that is moved back and forth by a drive unit disposed at the pressure receiving plate to perform mold opening/closing and mold clamping, a method is known in which load speed is controlled so that the load speed during deceleration or stopping after the mold clamping plate has been moved at low speed is less than load speed during deceleration or stopping after the mold clamping plate has been moved at high speed (see, for example, Japanese Unexamined Patent Publication No. 2004-155063.

Incidentally, in an injection molding machine, a mold clamping unit has a stationary platen supporting a stationary mold and a movable platen supporting a movable mold that face each other, transfers a driving force by an actuator for mold opening/closing to the movable platen directly or via a driving force transfer mechanism such as a toggle link mechanism or the like to move the movable platen back and forth for performing mold opening/closing operations. Mold opening/closing operations are mandatory operations to take out a molding product in every molding cycle. Therefore, making acceleration and deceleration of mold opening/closing operations greater leads to a shortened molding cycle. However, as the movable platen and the driving force transfer mechanism have considerable mass, a steep acceleration or deceleration operation generates vibration and noise at the mold clamping unit. Vibration reduces durability of an apparatus in general. Also, residual vibration generated at stoppage (when the movable mold comes into contact with the stationary mold) induces reduction of durability of the molds, or lowers molding quality.

A further document is EP 0 884 159 A1, which refers to a control system for controlling a motor-driven injection molding machine with high response.

Another document is US 5,929,587, which refers to a servo motor controlling method and apparatus for use in a two inertial system in which the servo motor and a load are mutually connected by elastic connection element.

US 2003/0062643 A1 discloses an electric injection molding machine in which a melt pressure value is provided without pressure sensing through solving one or more state equations using measured motor performance parameters.

Further documents are US 2013/0230821 A1 and US 2011/0054820 A1.

**SUMMARY**

The disclosed present invention herein has an objection to provide an injection molding machine with which acceleration and deceleration of mold opening/closing operations can be made greater, while vibration of the mold opening/closing operations can be reduced.

According to the present invention, an injection molding machine includes the features of claim 1.

According to at least one embodiment of the present invention, it is possible to obtain an injection molding machine with which acceleration and deceleration of mold opening/closing operations can be made greater, while vibration of the mold opening/closing operations can be reduced.

**BRIEF DESCRIPTION OF DRAWINGS**

FIG. 1 is a schematic view illustrating an injection molding machine 10 in a state when mold closing is completed according to an embodiment;
FIG. 2 is a schematic view illustrating an injection molding machine 10 in a state when mold opening is completed according to an embodiment;
FIG. 3 is a schematic view illustrating an injection molding machine 10A in a state when mold closing is completed according to another embodiment;
FIG. 4 is a schematic view illustrating an example of a controller 90 for controlling operations and the like of a mold clamping unit of an injection molding machine 10 or 10A;
FIG. 5 is a schematic view illustrating an example of a dynamics model for a direct-mold-type injection molding machine 10;

FIG. 6 is a schematic view illustrating an example of a dynamics model for a toggle-type injection molding machine 10A;

FIG. 7 is a block diagram illustrating an example of a control block 200 implemented with a controller 90;

FIG. 8 is a block diagram that is simplified from the block diagram in FIG. 7;

FIG. 9 is a block diagram that is simplified from the block diagram in FIG. 8; and

FIG. 10 is a block diagram according to a comparison example.

## DETAILED DESCRIPTION

In the following, embodiments of the present invention will be described with reference to the drawings. The same or corresponding elements across the drawings are assigned the same or corresponding numerical codes, and their description may not be repeated. Also, the moving direction of a movable platen during mold closing is referred to as the front, and the moving direction of the movable platen during mold opening is referred to as the rear.

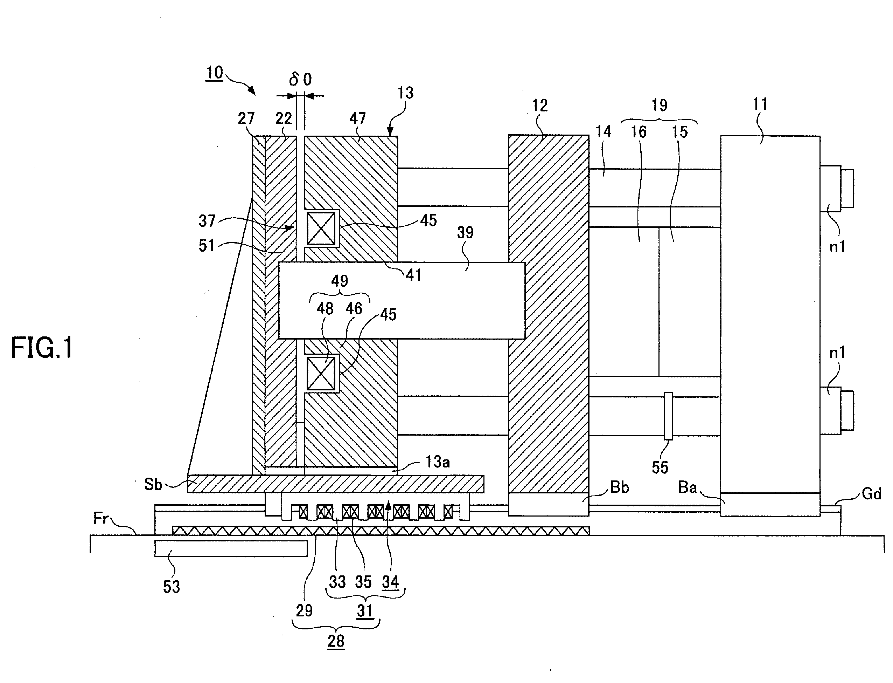

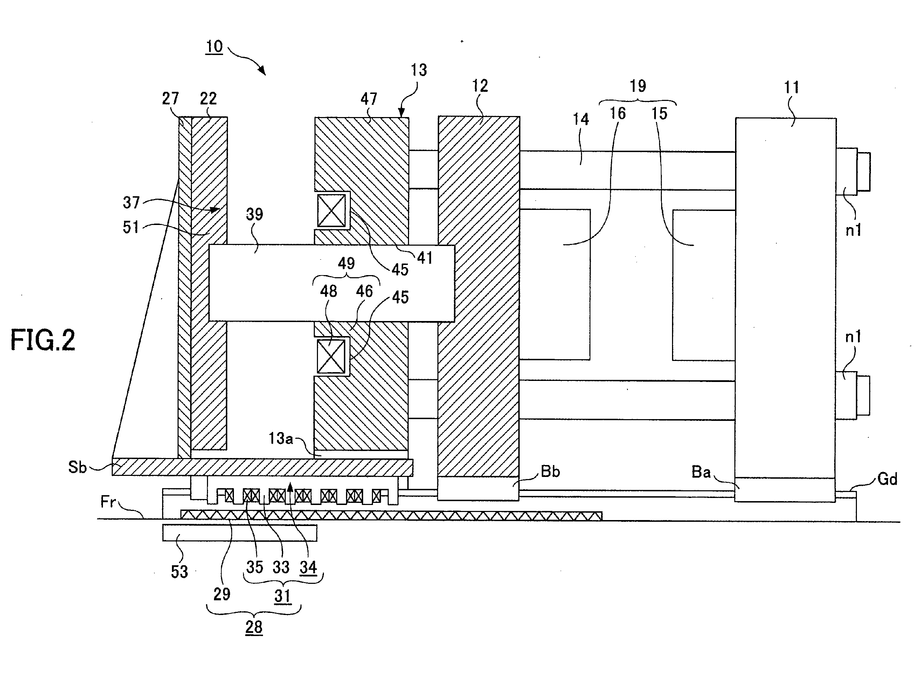

FIG. 1 is a schematic view illustrating an injection molding machine 10 in a state when mold closing is completed according to the present embodiment. FIG. 2 is a schematic view illustrating the injection molding machine 10 in a state when mold opening is completed according to the present embodiment.

In FIGs. 1-2, the numeric code 10 designates the injection molding machine, Fr designates a frame of the injection molding machine 10, Gd designates a guide laid on the frame Fr including two rails, and 11 designates a stationary platen. The stationary platen 11 may be disposed on a position adjustment base Ba that is movable along the guide Gd extending in the mold opening/closing directions (the left and right directions in FIGs. 1-2). Here, the stationary platen 11 may be placed on the frame Fr.

A movable platen 12 is disposed facing the stationary platen 11. The movable platen 12 is fixed on a movable base Bb, and the movable base Bb can travel along the guide Gd. This makes the movable platen 12 movable relative to the stationary platen 11 in the mold opening/closing direction.

A rear platen 13 is disposed having a predetermined interval with the stationary platen 11 and in parallel with the stationary platen 11. The rear platen 13 is fixed on the frame Fr via legs 13a.

Four tie bars 14 as connection members are provided across the stationary platen 11 and the rear platen 13 (only two of the four tie bars 14 are shown in FIGs. 1-2). The stationary platen 11 is fixed to the rear platen 13 via the tie bars 14. The movable platen 12 is disposed so as to freely move back and forth along the tie bars 14. Guide holes are formed through the movable platen 12 for the tie bars 14 to penetrate through at locations (not shown) corresponding to the tie bars 14. Here, instead of the guide hole, notches may be formed.

At front end parts (right end part in FIGs. 1-2) of the tie bars 14, screw threads are formed (not shown), respectively, with which nuts n1 are screwed tightly to fix the front end parts of the tie bars 14 to the stationary platen 11. Rear end parts of the tie bars 14 are fixed to the rear platen 13.

The stationary platen 11 has a stationary mold 15 attached, and the movable platen 12 has a movable mold 16 attached, respectively. The stationary mold 15 and movable mold 16 come into contact with or move away from each other with back and forth movement of the movable platen 12, to perform mold closing, mold clamping and mold opening. Here, when performing mold clamping, a cavity space (not shown) is formed between the stationary mold 15 and the movable mold 16 to be filled with molten resin. The stationary mold 15 and the movable mold 16 constitute a mold unit 19.

An attraction plate 22 is disposed in parallel with the movable platen 12. The attraction plate 22 is fixed to a slidable base Sb via an attachment plate 27, and the slidable base Sb can travel along the guide Gd. This makes the attraction plate 22 freely movable back and forth in the rear of the rear platen 13. The attraction plate 22 may be formed of a soft magnetic material. Here, the attachment plate 27 may not be provided. In this case, the attraction plate 22 is directly fixed to the slidable base Sb.

A rod 39 is disposed having the attraction plate 22 connected at the rear end part, and the movable platen 12 connected at the front end part. Therefore, the rod 39 moves forward along with the attraction plate 22 during mold closing to move the movable platen 12 forward. During mold opening, the rod 39 moves backward along with the attraction plate 22 to move the movable platen 12 backward. Therefore, a rod hole 41 is formed through a center portion of the rear platen 13 for having the rod 39 penetrate through.

A linear motor 28 is a drive unit for mold opening/closing to move the movable platen 12 back and forth, which is disposed, for example, between the attraction plate 22 attached to the movable platen 12 and the frame Fr. Here, the linear motor 28 may be disposed between the movable platen 12 and the frame Fr.

The linear motor 28 includes a stator 29 and a mover 31. The stator 29 is formed on the frame Fr in parallel with the guide Gd to cover a movement range of the slidable base Sb. The mover 31 is formed at the lower end of the slidable base Sb, facing the stator 29 to cover a predetermined range.

The mover 31 includes a core 34 and windings 35. The core 34 includes multiple magnetic pole teeth 33 projecting toward the stator 29. The multiple magnetic pole teeth 33 are arrayed in a direction parallel to the mold opening/closing directions with a predetermined pitch. The windings 35 wind around the magnetic pole teeth 33, respectively.

The stator 29 includes a core (not shown) and multiple permanent magnets (not shown) disposed on the core. The multiple permanent magnets are arrayed in a direction parallel to the mold opening/closing direction with a predetermined pitch, and have magnetic poles at the side facing the mover 31 that are set to north poles and south poles alternately.

When a predetermined current is supplied to the windings 35 of the mover 31, the mover 31 is moved back and forth by an interaction between a magnetic field formed by the current flowing the windings 35 and a magnetic field formed by the permanent magnets. This makes the attraction plate 22 and the movable platen 12 move back and forth, with which mold closing and mold opening are performed. Feedback control is applied to the linear motor 28 based on detection results of a position sensor 53 for detecting a position of the mover 31 so that the position of the mover 31 reaches a target value. Aspects of the feedback control will be described in detail later. By having the position sensor 53 detect the position of the mover 31, the distance between the movable mold 16 and the stationary mold 15 (mold opening/closing position) can be detected.

Here, although the permanent magnets are provided for the stator 29 and the windings 35 are provided for the mover 31 according to the present embodiment, windings may be provided for a stator, and permanent magnets may be provided for a mover. In this case, the windings do not move while the linear motor 28 is driven, so that wiring for supplying electric power to the windings can be made easier.

Here, as a drive unit for mold opening/closing, instead of the linear motor 28, it is possible to use a rotary motor and a ball screw mechanism that converts rotational motion of the rotary motor into linear motion, or a hydro pneumatic cylinder such as an oil hydraulic cylinder or an air pressure cylinder.

An electromagnet unit 37 generates an attraction force between the rear platen 13 and the attraction plate 22. The attraction force is transferred to the movable platen 12 via the rod 39 to generate a mold clamping force between the movable platen 12 and the stationary platen 11.

The electromagnet unit 37 is configured with an electromagnet 49 formed on the rear platen 13 and an attraction part 51 formed on the attraction plate 22. The attraction part 51 is formed at a predetermined part of the attraction surface (front end surface) of the attraction plate 22, for example, a part that surrounds the rod 39 on the attraction plate 22 and faces the electromagnet 49. Also, at a predetermined part of the attraction surface (rear end surface) of the rear platen 13, a groove 45 is formed, for example, around the rod 39, for containing a winding 48 of the electromagnet 49. A core 46 is formed inside of the groove 45. The winding 48 winds around the core 46. A yoke 47 is formed on the rear platen 13 at a part other than the core 46.

Here, although the electromagnet 49 is formed separately from the rear platen 13 and the attraction part 51 is formed separately from the attraction plate 22 according to the present embodiment, an electromagnet may be formed as a part of the rear platen 13, and an attraction part may be formed as a part of the attraction plate 22. Also, the electromagnet and the attraction part may be placed conversely. For example, the electromagnet 49 may be provided on the attraction plate 22, and the attraction part 51 may be provided on the rear platen 13. Also, there may be multiple windings 48 of the electromagnet 49.

When the winding 48 is supplied with current in the electromagnet unit 37, the electromagnet 49 is driven to attract the attraction part 51, which enables to generate a mold clamping force.

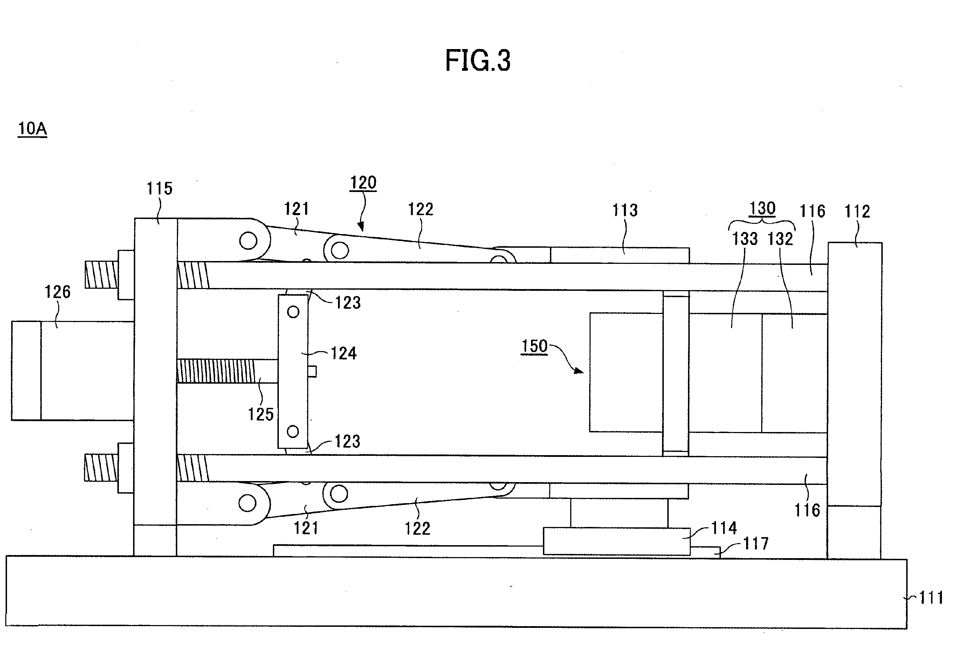

FIG. 3 is a schematic view illustrating an injection molding machine 10A in a state when mold closing is completed according to another embodiment. As illustrated in FIG. 3, the injection molding machine 10A includes a frame 111, a stationary platen 112 fix on the frame 111, and a rear platen 115 disposed having an interval with the stationary platen 112. The stationary platen 112 and the rear platen 115 are connected with each other by multiple (for example, four) tie bars 116. The axial direction of the tie bars 116 is in the forward and backward directions. For allowing the tie bars 116 to extend during mold clamping, the rear platen 115 is placed on the frame 111 so that it can move back and forth relative to the frame 111.

The injection molding machine 10A further includes a movable platen 113 disposed between the stationary platen 112 and the rear platen 115. The movable platen 113 is fixed on a pair of sliders 114 at left and right, and the sliders 114 can freely move along a guide 117 laid on the frame 111 in the forward and backward directions. This makes it possible for the movable platen 113 to come into contact with or to move away from the stationary platen 112. The movable platen 113 has notches at positions that correspond to the tie bars 116.

Here, although the movable platen 113 has the notches at positions that correspond to the tie bars 116 according to the present embodiment, the movable platen 113 may have through-holes instead of the notches.

The movable platen 113 has a movable mold 133 attached on the surface facing the stationary platen 112, and the stationary platen 112 has a stationary mold 132 attached on the surface facing the movable platen 113. The stationary mold 132 and the movable mold 133 constitute a mold unit 130. When the movable platen 113 moves forward, the movable mold 133 and stationary mold 132 come into contact with each other, thus, mold closing is performed. Also, when the movable platen 113 moves backward, the movable mold 133 and stationary mold 132 move away from each other, thus, mold opening is performed.

The injection molding machine 10A further includes a toggle mechanism 120 disposed between the movable platen 113 and the rear platen 115, and a mold clamping motor 126 to operate the toggle mechanism 120. The mold clamping motor 26 includes a ball screw mechanism as a transmission mechanism to convert rotational motion into linear motion to move a driving shaft 125 back and forth for operating the toggle mechanism 120.

The toggle mechanism 120 includes, for example, a crosshead 124 movable in the forward/backward directions parallel to the mold opening/closing directions, second toggle levers 123 attached to the crosshead 124 so that they can rotate about respective pins, first toggle levers 121 attached to the rear platen 115 so that they can rotate about respective pins, and toggle arms 122 attached to the movable platen 113 so that they can rotate about respective pins. The first toggle levers 121 and the second toggle levers 123, and the first toggle levers 121 and the toggle arms 122, are pin-connected, respectively. The toggle mechanism 120 is a so-called "involute five-articulation double-toggle mechanism", which has a vertically symmetrical configuration.

The stationary platen 112, the movable platen 113, the rear platen 115, the toggle mechanism 120, the mold clamping motor 126, and the like constitute the mold clamping unit.

Next, operations of the injection molding machine 10A will be described. In a state when mold opening is completed, by driving the mold clamping motor 126 with forward rotation to move the crosshead 124 forward, the toggle mechanism 120 operates. This makes the movable platen 113 as a driven member move forward, and makes the movable mold 133 and the stationary mold 132 come into contact with each other as illustrated in FIG. 3, which completes mold closing.

By driving the mold clamping motor 126 further forward, the toggle mechanism 120 generates a mold clamping force obtained from a propelling force by the mold clamping motor 126 multiplied by a toggle factor. A cavity space (not shown) is formed between the stationary mold 132 and the movable mold 133 in a clamped state. Molten resin is supplied to fill the cavity space by an injection unit to be solidified to make a molding product.

Next, by driving the mold clamping motor 126 with backward rotation to move the crosshead 124 backward, the toggle mechanism 120 operates to move the movable platen 113 backward for performing mold opening. After that, an ejector unit 150 ejects the molding product from the movable mold 133. Here, the ejector unit 150 may have a discretionary configuration, for example, a configuration using a ball screw mechanism.

In the present embodiment, the mold clamping unit generates a mold clamping force by using the toggle mechanism 120. However, the toggle mechanism 120 may not be used. Instead, a propelling force generated by the mold clamping motor 126 may be directly transmitted to the movable platen 113 as a mold clamping force. Alternatively, a propelling force generated by a mold clamping cylinder may be directly transmitted to the movable platen 113 as a mold clamping force.

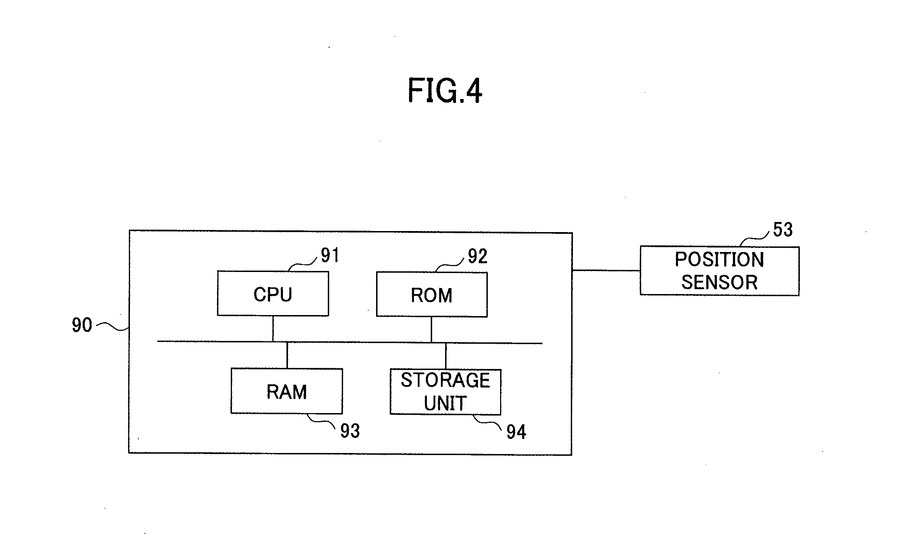

FIG. 4 is a schematic view illustrating an example of a controller 90 for controlling operations and the like of the mold clamping unit of the injection molding machine 10 or 10A. In the following, although an example will be described with the direct-mold-type injection molding machine 10, it is similar to the toggle-type injection molding machine 10A.

The controller 90 is configured with a CPU 91, a ROM 92, a RAM 93, a storage unit 94 such as a hard disk, input interfaces, output interfaces, a timer, a counter, and the like. The controller 90 implements various functions by having the CPU 91 execute programs stored in the ROM 92 or the storage unit 94.

The controller 90 has a position sensor 53 connected. The position sensor 53 detects the position of the mover 31. Here, the position sensor 53 may detect the position of a member that moves with the mover 31 (for example, the slidable base Sb). Here, if used for the injection molding machine 10A, the position sensor 53 may detect the position of the crosshead 124 of the injection molding machine 10A.

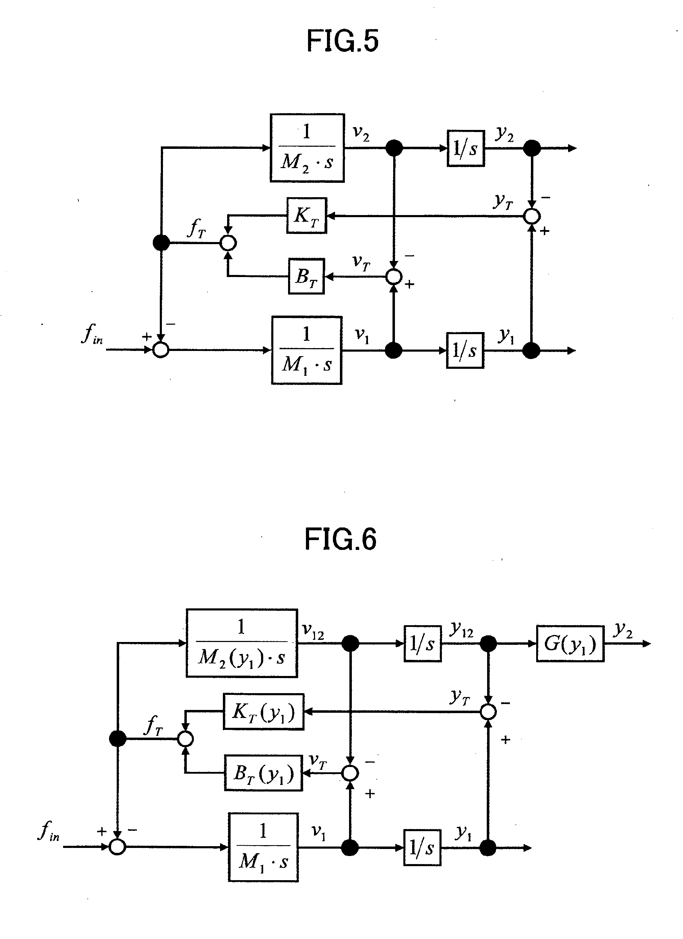

FIG. 5 is a schematic view illustrating an example of a dynamics model for the direct-mold-type injection molding machine 10. FIG. 6 is a schematic view illustrating an example of a dynamics model for the toggle-type injection molding machine 10A.

In general, a mold clamping unit has multiple resonance characteristics. Among them, a first-order resonance characteristic is the most dominant, which will be considered as a two-inertia model in the following. The two-inertia model can be represented by a block diagram as illustrated in FIG. 5. Although the embodiment will be described with the direct-mold-type below, substantially the same effects can be obtained with the toggle-type if designing a damping control system based on a dynamics model illustrated in FIG. 6 that takes a deceleration ratio $G(y_1)$ into consideration, which changes depending on the position of a drive unit.

In FIG. 5, a drive unit corresponds to the slidable base Sb directly driven by the linear motor 28, and a driven unit corresponds to the attraction plate 22 and the movable platen 12. Therefore, for example, inertia of the drive unit $M_1$ corresponds to the mass of the slidable base Sb directly driven by the linear motor 28. Also, connection rigidity $K_T$ of the drive unit and the driven unit corresponds to mechanical rigidity of the attraction plate 22 and the movable platen 12. Also, inertia of the driven unit $M_2$ corresponds to the mass of the attraction plate 22 and the movable platen 12. Also, $B_T$ is a friction coefficient of the drive unit and the driven unit. Here, the mover 31 of the linear motor 28 may be included in the drive unit. In this case, inertia of the mover 31 is taken into consideration, which improves accuracy of the model.

Also, in FIG. 5, meanings of symbols are as follows:

> s: Laplace operator,
> $y_1$: position of the drive unit,
> $v_1$: speed of the drive unit,
> $y_2$: position of the driven unit,
> $v_2$: speed of the driven unit,
> $y_T$: relative displacement between the drive unit and the driven unit,
> $v_T$: relative speed between the drive unit and the driven unit,
> $f_T$: interaction between the drive unit and the driven unit, and
> $f_{in}$: driving force (control input).

Similarly in FIG. 6, a drive unit corresponds to the crosshead 124 (including the ball screw mechanism), and a driven unit corresponds to the movable platen 113. Here, the rotor of the mold clamping motor 126 (servomotor) may be included in the drive unit. In this case, inertia of the rotor is taken into consideration, which improves accuracy of the model. In FIG. 6, meanings of symbols are as follows:

> $y_{12}$: position of the driven unit relative to drive unit as a reference, $y_{12}=Y_2/g\ (y_1)$,
> $v_{12}$: speed of the driven unit relative to drive unit as a reference, $v_{12}=v_2/g\ (y_1)$,
> $y_T$: relative displacement between the drive unit and the driven unit, $(y_1-y_{12})$,
> $v_T$: relative speed between the drive unit and the driven unit, $(v_1-v_{12})$,
> $f_T$: interaction between the drive unit and the driven unit,
> $f_{in}$: driving force (control input), and
> $G(y_1)$: deceleration ratio of the toggle mechanism (function of $y_1$).

In many cases, it is difficult to obtain a friction coefficient $B_T$ of the drive unit and the driven unit. Therefore, it is identified from a response waveform of an actual mold clamping unit as resonance and antiresonance damping coefficients $\zeta_a$ and $\zeta_r$ in a transfer function described below.

From the dynamics model (block diagram representation) illustrated in FIG. 5, an input/output relationship is represented by transfer functions as formulas (1) and (2) below:

$$P_{u1} = \frac{y_1}{f_{in}} = \frac{s^2 + 2\varsigma_a\omega_a s + \omega_a{}^2}{M_1 s^2(s^2 + 2\varsigma_r\omega_r s + \omega_r{}^2)} \qquad \text{formula (1)}$$

$$P_{u2} = \frac{y_2}{f_{in}} = \frac{2\varsigma_a\omega_a s + \omega_a{}^2}{M_1 s^2(s^2 + 2\varsigma_r\omega_r s + \omega_r{}^2)} \qquad \text{formula (2)}$$

where $\omega_a$ is an antiresonance frequency, $\zeta_a$ is an antiresonance damping coefficient, $\omega_r$ is a resonance frequency, $\zeta_r$ is a resonance damping coefficient.

Here, a correspondence between FIG. 5 and formulas (1)-(2) is represented by the following formula.

$$\omega_a = \sqrt{\frac{K_T}{M_2}}, \omega_r = \sqrt{K_T\left(\frac{1}{M_1}+\frac{1}{M_2}\right)}$$

where $\zeta_a$ and $\zeta_r$ are parameters related to the friction coefficient $B_T$. As noted earlier, it is difficult to obtain the friction coefficient $B_T$ in many cases. Therefore, it is practical to identify $\zeta_a$ and $\zeta_r$ from a response waveform of an actual mold clamping unit, namely $\zeta_a$ from the antiresonance damping property and $\zeta_r$ from the resonance damping property.

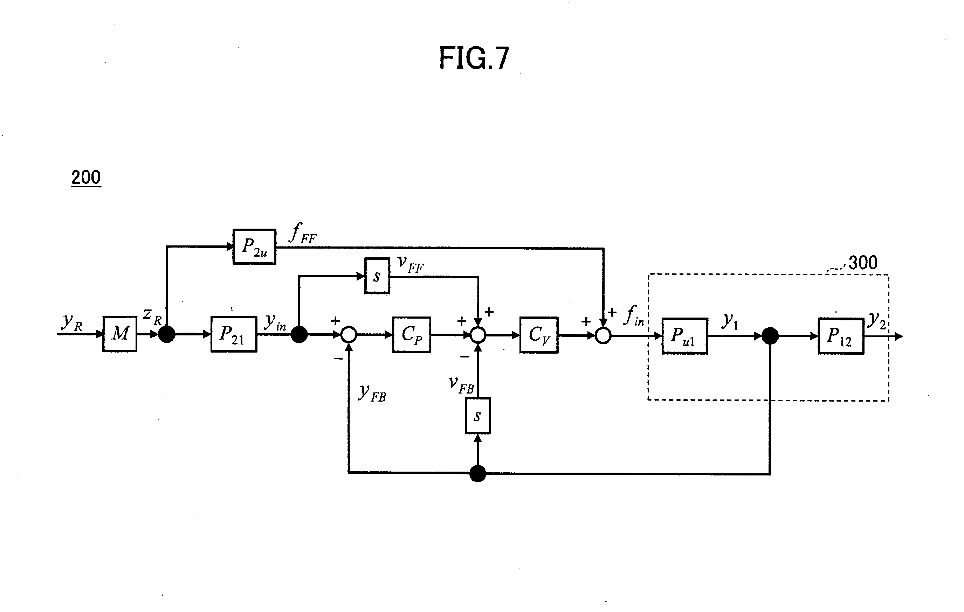

FIG. 7 is a block diagram illustrating an example of a control block 200 implemented with the controller 90. Here, in FIG. 7, a model of the mold clamping unit (not as configured in the controller 90, but as a model of a target of control) is shown in a block 300 framed with dotted lines for convenience's sake.

In FIG. 7, meanings of symbols are as follows:

M: tracking characteristic model,
$P_{u1}$: open-loop transfer characteristic from $f_{in}$ to $y_1$,
$P_{12}$: open-loop transfer characteristic from $y_1$ to $y_2$,
$P_{21}$: open-loop transfer characteristic from $y_2$ to $y_1$,
$P_{2u}$: open-loop transfer characteristic from $y_2$ to $f_{in}$,
$C_p$: position controller of the drive unit (P or PI),
$C_v$: speed controller of the drive unit (P or PI),
$y_R$: position command,
$z_R$: position command of the driven unit,
$y_{in}$: position command of the drive unit,
$y_{FB}$: feedback value, and
$f_{FF}$: torque feedforward value

where the position command $y_R$ is a target value for the position of the driven unit (target value of position control), which may be discretionarily determined for an embodiment. The feedback value $y_{FB}$ may be an output value from the position sensor 53.

In the example illustrated in FIG. 7, model tracking control is performed with a typical servo control mechanism for determining position (a controller in which a proportionate feedback controller P (Proportional) for position and a proportionate integral feedback controller PI (Proportional Integral) for speed are serially connected) added with feedforward control. Specifically, $P_{21}$ is a prefilter for correcting a position command not to excite vibration of the driven unit, and $P_{2u}$ is a torque feedforward filter for obtaining a torque feedforward to suppress vibration of the driven unit. If a dynamics model is given by formulas (1)-(2), $P_{21}$ and $P_{2u}$ are represented by the following formulas (3)-(4):

$$P_{21} = \left(P_{u2}\right)^{-1} \cdot P_{u1} = \frac{s^2 + 2\varsigma_a\omega_a s + \omega_a{}^2}{2\varsigma_a\omega_a s + \omega_a{}^2} \qquad \text{formula (3)}$$

$$P_{2u} = \left(P_{u2}\right)^{-1} = M_1 s^2 \frac{s^2 + 2\varsigma_r\omega_r s + \omega_r{}^2}{2\varsigma_a\omega_a s + \omega_a{}^2} \qquad \text{formula (4)}$$

Model tracking control can set a motion characteristic that is given to the driven unit to be controlled in the end as a model characteristic M. The model characteristic M may be a first-order or higher-order delay, or may be a delay characteristic having integral compensation applied. Here, the model characteristic M is not necessarily required. However, it is desirable to use the model characteristic M for suppressing degradation of control performance due to a characteristic difference between the dynamics model and an actual apparatus, and for stably implementing the prefilter and torque feedforward represented by non-proper transfer functions. Here, in general, a transfer function whose numerator has a higher degree than the denominator is called a "non-proper transfer function". A transfer function whose numerator has a degree higher than the denominator tends to be an unstable filter because differential is performed in the inside.

The model characteristic M may be, for example, as follow:

$$M = \frac{\omega^2}{s^2 + 2\zeta\omega s + \omega^2}$$

where $\omega$ is a design parameter for specifying response speed of the driven unit to a command, and $\zeta$ is a design parameter for specifying vibration damping property of the driven unit. $\zeta$ may be set to a value within a range of, for example, 0.7 to 1.

According to the example illustrated in FIG. 7, a position command $y_R$ is corrected by the prefilter $P_{21}$ to generate a position command of the drive unit $y_{in}$, and a driving force (control input) $f_{in}$ is determined based on the position command of the drive unit $y_{in}$ and feedback value $y_{FB}$. Here, the prefilter $P_{21}$ corrects the position command not to excite vibration of the driven unit based on the two-inertia model as described above. Therefore, according to the example illustrated in FIG. 7, excitement of vibration of the driven unit can be suppressed appropriately.

Also, according to the example illustrated in FIG. 7, the position command $y_R$ is converted to the torque feedforward value $f_{FF}$ by the torque feedforward filter $P_{2u}$, and a driving force (control input) $f_{in}$ is determined based on the torque feedforward value $f_{FF}$. Here, the torque feedforward filter $P_{2u}$ is set to generate the torque feedforward value $f_{FF}$ so as to suppress vibration of the driven unit. Therefore, according to the example illustrated in FIG. 7, excitement of vibration of the driven unit can be suppressed appropriately.

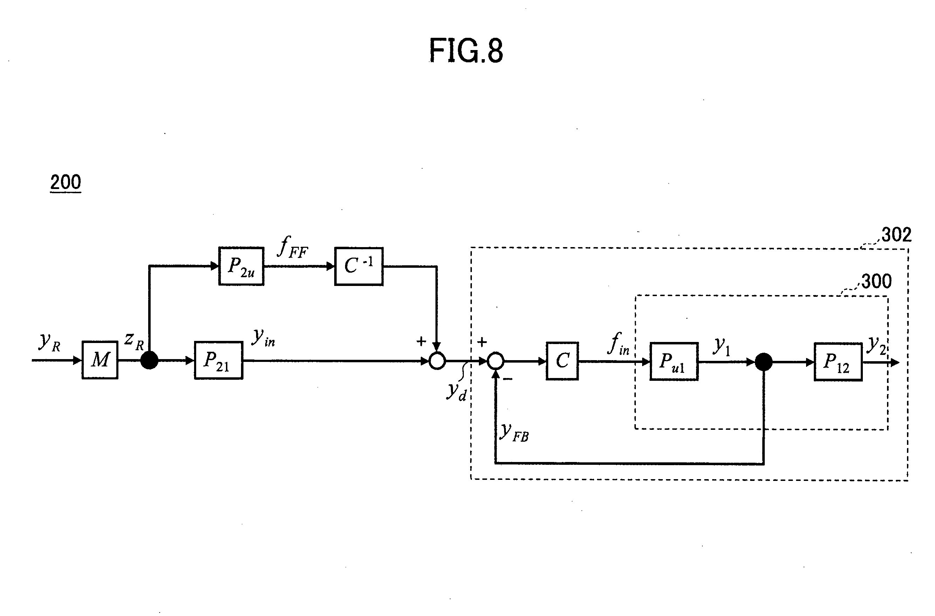

FIG. 8 is a block diagram that is simplified from the block diagram in FIG. 7. In FIG. 8, the feedback characteristic C is represented by $C=C_v \cdot (C_P + s)$.

Here, the transfer characteristic from $y_d$ to $y_1$ illustrated in FIG. 8 is represented as follows:

$$y_1 = \frac{C \cdot P_{u1}}{CP_{u1} + 1} y_d$$

Also, the transfer characteristic from $z_R$ to $y_d$ illustrated in FIG. 8 is represented as follows:

$$y_d = (P_{21} + P_{2n} \cdot C^{-1}) z_R$$

The following formula is obtained by transforming the right hand side of the above formula by multiplying $CP_{u2}(CP_{u2}(=1)$:

$$y_d = \frac{P_{21}CP_{u2} + P_{2u}C^{-1}CP_{u2}}{CP_{u2}} z_R = \frac{CP_{u1} + 1}{CP_{u2}} z_R$$

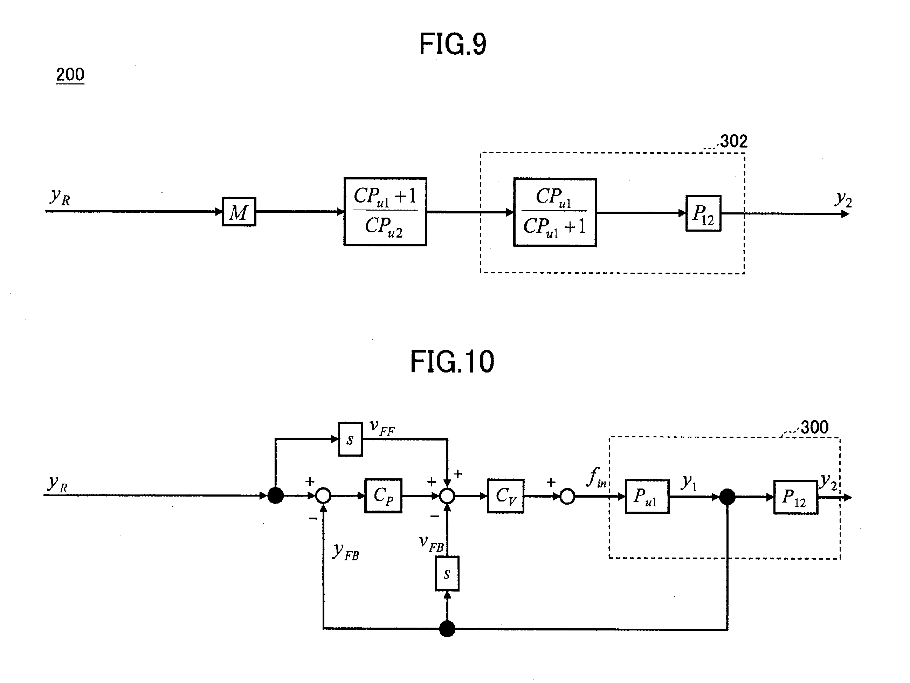

Using the above formulas, the block diagram illustrated in FIG. 8 can be further simplified as illustrated in FIG. 9. Referring to FIG. 9, it can be understood that the transfer function from $y_R$ to $y_2$ is equivalent to M that is $y_2 = M_{yR}$. Namely, the model characteristic in the block 302 (the characteristic to be controlled) and the feedback characteristic C are canceled by the torque feedforward filter $P_{2u}$, the prefilter $P_{21}$, and a reverse characteristic $C^{-1}$ of the feedback characteristic C, to reduce vibration of control targets (drive unit and driven unit).

Here, in the example illustrated in FIG. 7, for the torque feedforward filter $P_{2u}$, second-order differential ($s^2$ in the numerator) of the torque feedforward may be obtained by deriving an acceleration command from second-order pseudo differential of position commands, to use the acceleration command as input to the torque feedforward. If using the acceleration obtained in this way as input to the torque feedforward, the torque feedforward filter $P_{2u}'$ may be represented as follows:

$$P_{2u}' = M_1 \frac{s^2 + 2\varsigma_r \omega_r s + \omega_r^2}{2\varsigma_a \omega_a s + \omega_a^2} \qquad \text{formula (4a)}$$

In this case, if the denominator and numerator of the model characteristic M have a difference of degrees greater than one, both $MP_{21}$ and $MP_{2u}'$ are strictly proper transfer functions according to formulas (3)-(4a). Here, a "strictly proper transfer function" is a transfer function where (the degree of numerator) < (the degree of denominator). If (the degree of numerator) $\leq$ (the degree of denominator), it is called a "proper transfer function".

FIG. 10 is a block diagram according to a comparison example. The comparison example illustrated in FIG. 10 mainly differs from the example illustrated in FIG. 7 in that M, $P_{2u}$, are $P_{21}$ are not provided. Namely, in the comparison example, only speed feedforward is applied, which is widely used in usual servo control mechanisms. The comparison example generates notable residual vibration when determining position. When performing mold opening, an overshot part corresponds to a contact operation of molds.

On the other hand, according to the present embodiment illustrated in FIG. 7 and the like, by applying M, $P_{2u}$, and $P_{21}$, positional deflection is virtually 0 when completing output of a command, and residual vibration can be reduced. Thus, according to the present embodiment, by using damping control based on a dynamics model, it is possible to effectively reduce vibration of a driven unit generated by acceleration and deceleration for mold opening/closing.

As above, the embodiments have been described in detail. Further, the present invention is not limited to these embodiments, but various variations and modifications may be made without departing from the scope of the present invention. Also, all or multiple configuration elements in the above embodiments may be combined.

For example, in the embodiment described above, the model characteristic M, the torque feedforward filter $P_{2u}$ and the prefilter $P_{21}$ are all used. Alternatively, one or two of these three may be omitted. For example, if the torque feedforward filter $P_{2u}$ is omitted, a transfer characteristic from $z_R$ to $y_d$ is represented as follows:

$$y_d = P_{21} z_R = \frac{P_{u1}}{P_{u2}} z_R$$

Therefore, a transfer characteristic from $y_R$ to $y_2$ is represented as follows with which only the $P_{u2}$ characteristic can be canceled:

$$y_2 = M \frac{CP_{u1}}{CP_{u1} + 1} y_R$$

Also, if the prefilter $P_{21}$ is omitted, a transfer characteristic from $z_R$ to $y_d$ is represented as follows:

$$y_d = (1 + P_{2u} C^{-1}) z_R = \frac{CP_{u2} + 1}{CP_{u2}} z_R$$

Therefore, a transfer characteristic from $y_R$ to $y_2$ is represented as follows with which the resonance of a control target can be deleted:

$$y_2 = M \frac{CP_{u2} + 1}{CP_{u1} + 1} y_R$$

Also, in the embodiment described above, the drive unit position $y_1$ is used as the feedback value $y_{FB}$. Alternatively, the driven unit position y2 may be used for feedback. If the driven unit position $y_2$ may be used for feedback, $y_2 = My_R$ is satisfied by omitting the prefilter $P_{21}$, which makes it possible to reduce vibration of a control target similarly to the above embodiments.

**Claims**

1. An injection molding machine (10, 10A) comprising:

    a drive source;
    a drive unit (Sb, 124) configured to be driven by the drive source;
    a driven unit (22, 12, 113) configured to be driven by the drive source via the drive unit;
    a correction command generation unit configured to generate a correction command ($y_{in}$) by correcting a command value received as input ($y_R$); and
    a feedback control unit (302) configured to feed a control input ($f_{in}$) to the drive unit based on the correction command and a feedback value ($y_{FB}$) from the drive unit or the driven unit, **characterized in that** the injection molding machine further comprises:

    a filter unit ($P_{21}$) configured to perform filtering on the command value received as input,
    wherein the correction command generation unit corrects the command value from the filter unit for generating the correction command.

2. The injection molding machine as claimed in claim 1, wherein the correction command includes a position command obtained by correcting the command value.

3. The injection molding machine as claimed in claim 1 or 2, wherein the correction command includes a torque command obtained by correcting the command value.

4. The injection molding machine as claimed in any of claims 1 to 3, wherein the correction command is generated based on a dynamics model.

5. The injection molding machine as claimed in claim 4, wherein the dynamics model includes a two-inertia model in which inertia of the drive unit and inertia of the driven unit are taken into consideration.

**Patentansprüche**

1. Spritzgussmaschine (10, 10A) mit:

einer Antriebsquelle,
einer Antriebseinheit (Sb, 124), die dazu ausgestaltet ist, durch die Antriebsquelle angetrieben zu werden,
einer angetriebenen Einheit (22, 12, 113), die dazu ausgestaltet ist, durch die Antriebsquelle über die Antriebseinheit angetrieben zu werden,
einer Korrekturbefehl-Erzeugungseinheit, die dazu ausgestaltet ist, einen Korrekturbefehl ($y_{in}$) zu erzeugen, indem sie einen Korrekturbefehl korrigiert, den sie als Eingabe ($y_R$) empfangen hat, und
einer Rückkopplungssteuerungseinheit (302), die dazu ausgestaltet ist, eine Steuerungseingabe ($f_{in}$) zur An-triebseinheit aufgrund des Korrekturbefehls und eines Rückkopplungswerts ($y_{fb}$) von der Antriebseinheit oder der angetriebenen Einheit zuzuführen, **dadurch gekennzeichnet, dass** die Spritzgussmaschine ferner auf-weist:

eine Filtereinheit ($P_{21}$), die dazu ausgestaltet ist, ein Filtern des Befehlswerts durchzuführen, der als Eingabe empfangen wird,
wobei die Korrekturbefehl-Erzeugungseinheit den Befehlswert von der Filtereinheit korrigiert, um den Korrekturbefehl zu erzeugen.

2. Spritzgussmaschine nach Anspruch 1, wobei der Korrekturbefehl einen Positionsbefehl aufweist, der durch Korrigieren des Befehlswerts erhalten wird.

3. Spritzgussmaschine nach Anspruch 1 oder 2, bei welcher der Korrekturbefehl einen Drehmomentbefehl aufweist, der durch Korrigieren des Befehlswerts erhalten wird.

4. Spritzgussmaschine nach einem der Ansprüche 1-3, wobei der Korrekturbefehl basierend auf einem Dynamikmodell erzeugt wird.

5. Spritzgussmaschine nach Anspruch 4, wobei das Dynamikmodell ein Modell mit zwei Trägheiten ist, wobei die Trägheit der Antriebseinheit und die Trägheit der angetriebenen Einheit berücksichtigt werden.

**Revendications**

1. Machine de moulage par injection (10, 10A) comprenant :

une source d'entraînement ;
une unité d'entraînement (Sb, 124) configurée pour être entraînée par la source d'entraînement ;
une unité entraînée (22, 12, 113) configurée pour être entraînée par la source d'entraînement par l'intermédiaire de l'unité d'entraînement ;
une unité de génération d'instruction de correction configurée pour générer une instruction de correction ($y_{in}$) en corrigeant une valeur d'instruction reçue en tant qu'entrée ($y_R$) ; et
une unité de commande à rétroaction (302) configurée pour fournir une entrée de commande ($f_{in}$) à l'unité d'entraînement sur la base de l'instruction de correction et d'une valeur de rétroaction ($Y_{FB}$) en provenance de l'unité d'entraînement ou de l'unité entraînée, **caractérisée en ce que** la machine de moulage par injection comprend en outre :

une unité de filtrage ($P_{21}$) configurée pour effectuer un filtrage sur la valeur d'instruction reçue en tant qu'entrée,

dans laquelle l'unité de génération d'instruction de correction corrige la valeur d'instruction provenant de l'unité de filtrage pour générer l'instruction de correction.

2. Machine de moulage par injection telle que revendiquée dans la revendication 1, dans laquelle l'instruction de correction comporte une instruction de position obtenue en corrigeant la valeur d'instruction.

3. Machine de moulage par injection telle que revendiquée dans la revendication 1 ou 2, dans laquelle l'instruction de correction comporte une instruction de couple obtenue en corrigeant la valeur d'instruction.

4. Machine de moulage par injection telle que revendiquée dans l'une des revendications 1 à 3, dans laquelle l'instruction de correction est générée sur la base d'un modèle dynamique.

5. Machine de moulage par injection telle que revendiquée dans la revendication 4, dans laquelle le modèle dynamique comporte un modèle à deux inerties dans lequel l'inertie de l'unité d'entraînement et l'inertie de l'unité entraînée sont prises en considération.

FIG.1

EP 2 783 828 B1

FIG.2

# FIG.3

10A

# FIG.4

EP 2 783 828 B1

# FIG.5

# FIG.6

FIG.7

# FIG.8

## FIG.9

$200$

$$y_R \rightarrow \boxed{M} \rightarrow \boxed{\dfrac{CP_{u1}+1}{CP_{u2}}} \rightarrow \boxed{\dfrac{CP_{u1}}{CP_{u1}+1}} \rightarrow \boxed{P_{12}} \rightarrow y_2$$

302

## FIG.10

300

$$y_R$$

$v_{FF}$, $\boxed{s}$, $C_P$, $y_{FB}$, $v_{FB}$, $\boxed{s}$, $C_V$, $f_{in}$, $\boxed{P_{u1}}$, $y_1$, $\boxed{P_{12}}$, $y_2$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004155063 A
- EP 0884159 A1
- US 5929587 A
- US 20030062643 A1
- US 20130230821 A1
- US 20110054820 A1